(19) Europäisches Patentamt

European Patent Office

Office européen des brevets

(11) **EP 1 232 385 B1**

(12) **FASCICULE DE BREVET EUROPEEN**

(45) Date de publication et mention
de la délivrance du brevet:
**26.07.2006 Bulletin 2006/30**

(21) Numéro de dépôt: **00988861.1**

(22) Date de dépôt: **21.11.2000**

(51) Int Cl.:
***G01N 21/31*** *(2006.01)*

(86) Numéro de dépôt international:
**PCT/FR2000/003227**

(87) Numéro de publication internationale:
**WO 2001/038855 (31.05.2001 Gazette 2001/22)**

(54) **PROCEDE DE MESURE DU DEGRE ET DE L'HOMOGENEITE DE CALCINATION DES ALUMINES**

VERFAHREN ZUR BESTIMMUNG DES KALZINIERUNGSGRADES UND DER
KALZINIERUNGSHOMOGENITÄT VON ALUMINIUMOXIDEN

METHOD FOR MEASURING DEGREE AND HOMOGENEITY OF ALUMINA CALCINATION

(84) Etats contractants désignés:
**AT BE CH CY DE DK ES FI FR GB GR IE IT LI LU
MC NL PT SE TR**

(30) Priorité: **26.11.1999 FR 9914951**

(43) Date de publication de la demande:
**21.08.2002 Bulletin 2002/34**

(73) Titulaire: **Aluminum Pechiney
75218 Paris Cedex 16 (FR)**

(72) Inventeurs:
• **MARTINENT-CATALOT, Valérie
F-13120 Gardanne (FR)**
• **LAMERANT, Jean-Michel
F-13320 Bouc-Bel-Air (FR)**
• **ROUIT, Bernard
F-13004 Marseille (FR)**

(74) Mandataire: **Marsolais, Richard et al
Péchiney,
Immeuble "SIS"
217, cours Lafayette
69451 Lyon Cedex 06 (FR)**

(56) Documents cités:
**EP-A- 0 352 911          US-A- 3 941 874**

EP 1 232 385 B1

## Description

### DOMAINE TECHNIQUE

L'invention concerne un procédé de contrôle en cours de production du degré et de l'homogénéité de calcination des alumines.

La majorité des alumines techniques passent, dans leur processus de production, par une étape de calcination. Cette étape est déterminante pour définir les propriétés d'usage de la poudre qui seront utilisées dans de nombreuses applications (polissage, bétons réfractaires, céramiques fines,...). On sait que le degré de calcination est bien corrélé avec la surface développée par l'alumine calcinée et, pour les alumines qui nous intéressent, celle-ci, mesurée par la méthode BET, est typiquement comprise entre 0,5 et 5 $m^2/g$.

Or de nombreuses études et certaines applications visées (céramiques, électroniques,...) montrent la nécessité d'une analyse plus fine de ces produits, une analyse donnant notamment des informations sur l'homogénéité de calcination du produit: il est clair que deux alumines ayant une surface BET égale par exemple à 1 $m^2/g$ mais l'une homogène et l'autre constituée d'un mélange de deux alumines à 0,5 et 1,5 $m^2/g$ n'auront pas du tout les mêmes propriétés applicatives.

### ETAT DE LA TECHNIQUE

Lors de la calcination, les grains d'alumines se transforment en agglomérats de cristallites plus ou moins grosses suivant le degré de calcination.

On connaît par US 3 941 874 un procédé permettant de mesurer le degré de calcination de l'alumine par mesure de la perte en poids de ladite alumine.

Pour estimer le degré de calcination atteint, on peut également broyer l'alumine à la taille de cristallite et faire une analyse granulométrique mais cette méthode n'est pas ou peu employée dans la pratique car elle est longue et incompatible avec la conduite d'un procédé.

On peut également mesurer ce degré de calcination de façon indirecte à partir de la surface développée par l'alumine en utilisant une méthode classique, telle que la méthode BET. Cette méthode consiste à mesurer la quantité d'azote adsorbée sur toute la surface développée de l'alumine. Cette quantité est d'autant plus grande que la surface est importante et que le grain est poreux (à condition toutefois que les pores soient débouchants). On l'utilise en production mais elle est longue et ne donne pas d'information sur l'hétérogénéité du degré de calcination du produit.

Parmi les méthodes d'analyse connues, l'analyse d'image peut être employée mais elle donne des informations essentiellement dimensionnelles (tailles de grains, facteurs de forme) qui ne sont pas corrélées avec l'information voulue (degré et homogénéité de la calcination).

### PROBLEME POSE

La demanderesse a cherché à intégrer dans la conduite du procédé de fabrication des alumines un moyen de mesure du degré et de l'homogénéité de la calcination.

Un tel moyen doit être plus rapide que la méthode BET pour évaluer le degré moyen de calcination et donner une information sur l'hétérogénéité du degré de calcination de l'alumine produite.

### OBJET DE L'INVENTION

Un premier objet de l'invention est un procédé de mesure du degré et de l'homogénéité de la calcination de l'alumine comprenant l'emploi d'un dispositif d'analyse d'image équipé d'une caméra sensible dans une fenêtre d'analyse spectrale correspondant à un domaine de longueurs d'ondes comprises entre 1000 Å et 10000 Å et comportant les étapes suivantes:

a) mélange de l'alumine à analyser dans un liquide dont l'indice de réfraction est, dans ledit domaine de longueurs d'onde, compris entre l'indice de réfraction d'une alumine faiblement calcinée et l'indice de réfraction d'une alumine fortement calcinée ;
b) préparation d'une lame pour observation dudit mélange dans ledit dispositif d'analyse d'images, ledit mélange étant éclairé par un rayonnement polychromatique stable compatible avec ladite fenêtre d'analyse spectrale ;
c) réception de l'image par la caméra et traitement du signal aboutissant à la définition d'une image composée d'un nombre donné de pixels à trois composantes colorimétriques ;
d) traitement statistique desdits pixels utilisant leurs composantes colorimétriques et permettant de donner le degré de calcination et l'homogénéité de la calcination par comparaison des données obtenues avec des données correspondantes d'alumines connues.

La demanderesse en effet est partie de l'hypothèse qu'en choisissant de mélanger la poudre d'alumine dans un liquide ayant un indice de réfraction moyen compris entre les indices extrêmes d'une alumine fortement calcinée et d'une alumine faiblement calcinée, elle se mettait dans les meilleures conditions pour accentuer les différences de réponses à un éclairement donné, typiquement de la lumière visible, et que ces différences de réponses pouvaient être traitées numériquement et exploitées statistiquement pour caractériser le degré de calcination de l'alumine observée ainsi que l'homogénéité de la calcination effectuée sur l'alumine.

Elle a obtenu des résultats très encourageants qui s'expliquent après coup de la façon suivante:

• L'indice de réfraction d'un corps varie en fonction de la longueur d'onde du rayonnement qui le traverse. Dans le domaine de la lumière visible, cette variation est beaucoup plus forte pour les liquides que pour les solides. Lorsqu'un solide est plongé dans un liquide ayant le même indice de réfraction, aucune dispersion ou absorption de la lumière ne se produit. Par contre si les indices de réfraction sont différents, on constate un phénomène de dispersion/absorption.

• Or, on sait que l'indice de réfraction d'une alumine varie suivant son degré de calcination. Si on observe une alumine plongée dans un liquide et si, pour une longueur d'onde donnée, l'indice de réfraction de l'alumine et du liquide n'est pas le même, il se produit un phénomène de dispersion/absorption qui se traduit par une réponse plus ou moins grande en intensité lumineuse.

• Lorsqu'un solide, en l'occurrence l'alumine, est dispersé en un très grand nombre de particules, les multiples facettes sont orientées de façon aléatoire par rapport au rayon de lumière incident. Il faut donc éclairer un grand nombre de particules pour avoir un effet statistique significatif sur l'image réfléchie (ou transmise).

• Si l'on éclaire avec une lumière polychromatique - dans le domaine du visible par exemple -, la réponse en intensité va être différente suivant la longueur d'onde. Le traitement du signal reçu par la caméra permet d'obtenir une image colorée pouvant être décomposée en une multitude de pixels caractérisés par trois composantes de couleur (suivant le système RVB recommandé en 1931 par la Compagnie Internationale de l'Eclairage CIE, ou encore suivant le système Lab (ou système de Hunt), ou encore suivant tout repère d'un espace colorimétrique à trois dimensions...).

La demanderesse a constaté que la couleur de chaque produit, ainsi exprimée pixel par pixel dans un espace colorimétrique à trois dimensions, est caractéristique du produit observé et qu'en reportant sur un histogramme les données souhaitées, on peut comparer cet histogramme à des histogrammes « standard » d'alumines connues dont le degré de calcination peut être mesuré par ailleurs par voie BET.

Dans cette démarche, deux étapes font appel à un rayonnement polychromatique mais on voit bien la distinction qui peut être faite entre la fenêtre d'analyse spectrale du rayonnement éclairant le mélange et le spectre visible utilisé pour décrire le résultat du traitement du signal reçu par la caméra.

La fenêtre d'analyse spectrale peut certes correspondre au spectre de la lumière visible mais elle peut correspondre également à un domaine de longueurs d'ondes plus restreint, continu ou discontinu, ou encore étendu vers les infra-rouges ou les ultra-violets. L'important est que la fenêtre d'analyse spectrale soit choisie de telle sorte que les indices de réfraction des alumines plus ou moins calcinées restent stables et que l'indice de réfraction du liquide varie dans ce domaine, ledit domaine étant suffisamment large pour que l'indice de réfraction du liquide soit compris entre l'indice de réfraction d'une alumine faiblement calcinée et l'indice de réfraction d'une alumine fortement calcinée. D'autre part, l'ordre de grandeur des longueurs d'ondes doit être notablement inférieur à celui de la taille des particules, ce qui pousse à définir une fenêtre d'analyse spectrale dans un domaine de longueurs d'ondes typiquement comprises entre 1000 Å et 10 000 Å, le spectre visible (#4000-7000 Å) étant de ce fait bien adapté et permettant de plus un contrôle facile du procédé de mesure. Pour faciliter la présentation, nous associerons par la suite la fenêtre d'analyse spectrale à un spectre de lumière visible et nous emploierons les termes habituellement utilisés dans le cadre de l'observation d'un objet éclairé par une lumière visible.

Pour préparer l'observation, on mélange la poudre d'alumine à analyser dans un liquide d'indice de réfraction donné. Comme, dans le spectre visible, l'indice de réfraction d'une alumine sous-calcinée est voisin de 1,70 et l'indice de réfraction d'une alumine $\alpha$ est voisin de 1,76, on choisira de préférence un liquide d'indice voisin de 1,73. De tels liquides, tel l'iodure de méthylène, sont disponibles dans le commerce.

Le mélange est déposé par exemple sur une lame de verre telle que celles utilisées en microscopie optique. La lame est ensuite placée dans le champ d'observation de la caméra à travers un système de grossissement tel que chaque particule puisse être représentée par un nombre suffisant de pixels. Typiquement, avec une image de 640*480 pixels, il est préférable de choisir un grossissement tel que l'image contienne moins de 1000 particules. Par contre, celles-ci doivent être en nombre suffisant, car il faut avoir un effet statistique significatif sur l'image. Le système de grossissement du dispositif d'analyse d'image utilisé dans le cadre de l'invention doit permettre d'analyser une image regroupant au moins 50 particules.

Le mélange est éclairé par un rayonnement polychromatique stable compatible avec la fenêtre d'analyse spectrale de la caméra, c'est-à-dire que le domaine de longueurs d'ondes du rayonnement réfléchi ou transmis est inclus dans la fenêtre d'analyse spectrale de la caméra.

Le signal perçu par la caméra est traité de telle sorte que l'on obtient une image définie par un nombre donné de pixels à trois composantes colorimétriques. L'image peut contenir une couleur correspondant à la radiation perçue par la caméra mais elle peut également avoir des couleurs codifiées caractérisant arbitrairement les radiations perçues - dans ce cas on parle de « fausses couleurs ». Par contre, il est préférable que l'on puisse disposer de toute l'étendue de l'espace colorimétrique pour définir chaque pixel de l'image.

Les pixels, caractérisés par les trois composantes d'un espace colorimétrique, sont ensuite traités. Dans un premier temps, il faut être sûr qu'ils correspondent à des particules car celles-ci ne sont pas jointives dans le mélange préparé sur la lame et n'occupent pas toute la surface de l'image. Le tri peut se faire facilement puisque la partie de l'image correspondant au fond, c'est-à-dire occupée seulement par le liquide, se présente avec une intensité lumineuse importante. On peut donc enlever tous les pixels dont les trois composantes sont supérieures à une valeur donnée.

Les pixels qui restent sont ensuite représentés dans l'espace colorimétrique. Comme l'alumine calcinée observée ne correspond pas à une phase parfaitement homogène et comme chaque pixel peut correspondre en fait à un cumul de photons d'énergie différente, donc à un mélange de couleurs, la représentation dans l'espace colorimétrique des pixels de l'image correspond à un nuage de points plus ou moins étendu. La demanderesse a constaté qu'en choisissant un liquide avec un indice de diffraction approprié à la fenêtre d'analyse spectrale choisie, on pouvait différencier les alumines par les nuages de points représentant ces alumines dans l'espace colorimétrique, la localisation de ces nuages étant liée à leur degré de calcination et l'étendue de ces nuages étant liée à leur degré d'homogénéité.

Disposant de ces représentations dans un espace à trois composantes, plusieurs traitements statistiques sont possibles. Le traitement décrit ici a pour but d'avoir une représentation plus facile à interpréter. Il consiste à situer les images à analyser par rapport aux nuages représentatifs de deux alumines connues correspondant à des niveaux de calcination les plus éloignés possibles. On choisit par exemple une alumine α et une alumine sous-calcinée, de préférence la moins calcinée mais la plus homogène possible.

En principe, les deux nuages correspondant l'un à l'alumine alpha, l'autre à l'alumine sous-calcinée sont distincts l'un de l'autre. Dans le cas contraire, il est préférable de choisir un autre liquide et/ou une autre fenêtre d'analyse spectrale.

Si les deux nuages de points sont distincts, on peut définir un sous-espace qui « passe » par ces nuages (un axe ou un plan qui passe par leurs barycentres par exemple) et dans lequel l'estimation du degré de calcination peut être faite par les « distances » entre points, mises en valeur dans ce sous-espace. Ainsi, on peut projeter le nuage de points de l'alumine à analyser sur ce sous-espace et estimer la distance qui existe entre cette projection et celle de l'alumine α et/ou celle existant entre cette projection et celle de l'alumine sous-calcinée.

Ainsi, en éclairant le mélange alumine + liquide avec de la lumière blanche visible, on constate qu'une particule d'alumine α donne une image bleue et qu'une alumine sous-calcinée donne une image marron plus ou moins sombre. Si les pixels ont été définis dans le repère RVB, on cherche ainsi à les classer suivant la composante «B-R» (bleu moins rouge). En classant le nombre de pixels ayant une composante B-R croissante, on obtient un histogramme ou spectre caractéristique : plus l'alumine est calcinée plus son spectre est placé à droite et inversement une alumine est d'autant moins calcinée que son spectre est situé à gauche.

La moyenne de l'histogramme ainsi obtenu est caractéristique du degré de calcination de l'alumine analysée.

L'écart-type de l'histogramme ainsi obtenu est caractéristique de l'homogénéité de la calcination de l'alumine analysée.

Un deuxième objet de l'invention est l'utilisation du procédé de mesure décrit ci-dessus pour contrôler le degré et l'homogénéité de la calcination de l'alumine selon la revendication 6. Ce procédé de mesure est beaucoup plus rapide que la méthode BET pour connaître le degré de calcination de l'alumine et permet de réagir beaucoup plus rapidement à une dérive des paramètres du four. Ceci est particulièrement appréciable dans le cadre d'un four tournant travaillant en continu et produisant plusieurs tonnes d'alumine à l'heure. Enfin, grâce à ce procédé, qui est le seul connu à l'heure actuelle permettant de connaître l'homogénéité de la calcination, on peut corriger les effets néfastes du recyclage des poussières qui se produit de façon intempestive et mal contrôlée dans les fours tournants et « pollue » l'alumine produite avec une alumine de granulométrie différente.

A partir d'un échantillon d'alumine sorti du four, quatre lames sont préparées. Chaque lame est observée à trois endroits différents suivant le procédé de mesure revendiqué. On obtient des résultats reproductibles à 5% près.

## FIGURES

La figure 1 illustre la chaîne d'acquisition utilisée dans le cadre de l'exemple exposé ci-après.

La figure 2 représente trois spectres de réponse sur l'axe (B-R+100) relatifs à trois alumines (a, b, c) ayant des degrés de calcination différents

La figure 3 montre la relation bijective existant entre l'indice de calcination (IC) mesuré par la méthode selon l'invention décrite dans l'exemple et la surface BET exprimée en $m^2/g$.

La figure 4 rappelle la relation entre la surface BET et la taille de cristallites (TC) exprimée en $\mu m$.

La figure 5 montre cette relation dans le domaine intéressant le plus spécifiquement les céramistes.

La figure 6 montre les spectres obtenus en mélangeant deux alumines de degrés de calcination différents.

La figure 7 montre, en fonction du pourcentage de l'un des constituants, l'évolution de l'indice d'homogénéité dans un mélange de deux alumines, l'une fortement calcinée, l'autre sous-calcinée.

## MODE DE REALISATION DE L'INVENTION

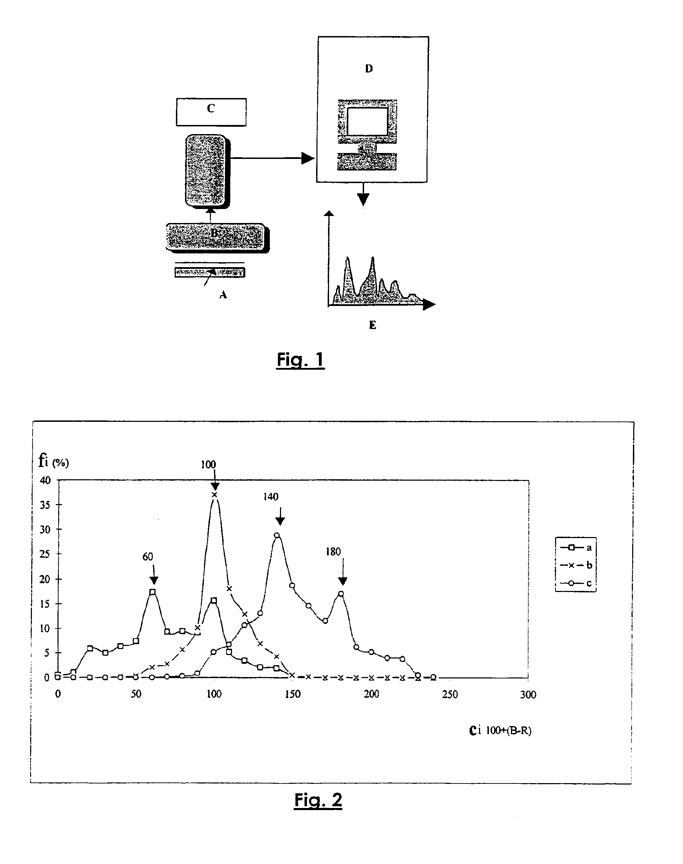

## Chaîne d'acquisition (figure 1)

La chaîne d'acquisition, schématisée en figure 1 est la suivante :

1) La préparation de la lame (A) sur laquelle on dépose le mélange alumine /liquide d'indice doit être faite avec précaution : il faut éviter l'apparition de bulles et avoir une répartition des particules la plus homogène possible, celles n'étant pas accolées les unes aux autres. Nous avons retenu un liquide d'indice 1,73 . Dans le cadre d'un contrôle industriel de la calcination en four tournant, cette préparation peut être automatisée.

2) Les grains d'alumine étant microniques, l'utilisation d'un microscope binoculaire (B) avec des objectifs variables suivant l'alumine est recommandée. Le but est d'avoir une quantité de grains suffisante pour une analyse statistique valable (on évite ainsi d'avoir à augmenter le nombre d'essais).

3) Les lames sont éclairées avec de la lumière du spectre visible. Le réglage et la stabilité de l'éclairage sont importants car ils interviennent dans les composantes colorimétriques des pixels de l'image obtenue par la caméra (C). Il faut notamment éviter les signaux saturés en intensité lumineuse
La caméra est dans cet exemple une caméra à matrice mono-CCD. Une caméra tri-CCD , plus précise car elle permet d'avoir séparément les trois couleurs de base (Rouge-Vert-Bleu), n'est pas nécessaire mais elle permet d'accéder à une information plus fine conduisant à une diminution de l'incertitude sur les mesures effectuées avec les images couleur.

4) Le système informatique (D) comprend

- une carte de numérisation qui permet de numériser l'information desservie par la caméra et offre de nombreuses possibilités de réglage (teinte, saturation, contraste, brillance,...),
- le logiciel de traitement d'images ; il permet d'effectuer des acquisitions avec la caméra puis de traiter les images sous différents formats (RVB, HSL, niveaux de gris,...). Un système de macros-instructions autorise les traitements automatiques des acquisitions. Nous avons utilisé OPTIMAS.
- l'ordinateur utilisé est suffisamment puissant pour traiter les images acquises 640*480 pixels * 3 composantes). En l'occurrence, l'ordinateur utilisé est un PC ayant 48 Mo de mémoire vive.

5) La couleur de chaque produit est ainsi exprimée pixel par pixel dans un espace colorimétrique à trois dimensions et chaque nuance de couleur peut être reportée sur un histogramme à partir duquel les données souhaitées peuvent être extraites.

En classant les pixels suivant leurs composantes, on établit un spectre (E) par projection sur un axe particulièrement adapté pour accentuer les différences de réponse. Ainsi suivant leur degré de calcination, les grains apparaissent tout au long de l'axe. La moyenne du spectre peut facilement être reliée au degré moyen de calcination, lui-même corrélé avec la surface BET : ainsi chaque famille de produit présente une allure du spectre spécifique. De plus, la dispersion (l'étalement de la courbe) donne une estimation fiable de l'hétérogénéité de calcination de chaque produit.

## Exemple d'application

## Référentiel de l'espace chromatique: RGB, l'axe sur lequel le spectre est projeté étant l'axe B-R

Dans ce référentiel, plus la composante du pixel est bleue, plus la partie du grain correspondante est considérée comme calcinée. Nous avons donc calculé pour chaque pixel la différence entre la composante bleue (cotée 0 à 255) et la composante rouge (idem) et reporté sur l'axe B-R+100 (écart entre composante bleue et composante rouge + 100) les populations de pixels correspondant à des niveaux de différences regroupés par pas de 10. Les histogrammes ainsi obtenus ont l'aspect des spectres caractéristiques de la figure 2, relatifs à trois alumines ayant des degrés de calcination différents.

L'alumine a est une alumine métallurgique, peu calcinée, et a une part importante de ses grains qui ont une composante bleue inférieure à la composante rouge: ils apparaissent plutôt marron. Au contraire, l'alumine c est une alumine calcinée en présence d'un minéralisant. Elle présente des grains bleus en majorité. L'alumine b est une alumine intermédiaire qui présente un spectre situé entre les deux spectres extrêmes. Les alumines a, b et c présentent des surfaces BET décroissantes (a: 75 $m^2$/g; b: 3.9 $m^2$/g; c: 1.1 $m^2$/g). Les produits semblent ainsi classés suivant leur degré de calcination ou, dans l'ordre opposé, suivant leur surface BET.

On remarque que certains pics sont caractéristiques de la famille des alumines :

- pic à 60 : grains sous-calcinés,
- pic à 180 : grains calcinés.

## Détermination de l'indice de calcination

A partir de spectres tels que ceux de la figure 2, on peut déterminer un indice de calcination (IC) :
Soit i les classes de 0 à 260 (pas de 10), $f_i$ le pourcentage et $c_i$ la valeur de l'écart (composante bleue - composante rouge + 100) correspondant à chaque classe i, l'indice de calcination est défini par:

$$IC = \frac{\sum\limits_{i=0}^{i=260} fi * ci}{100}$$

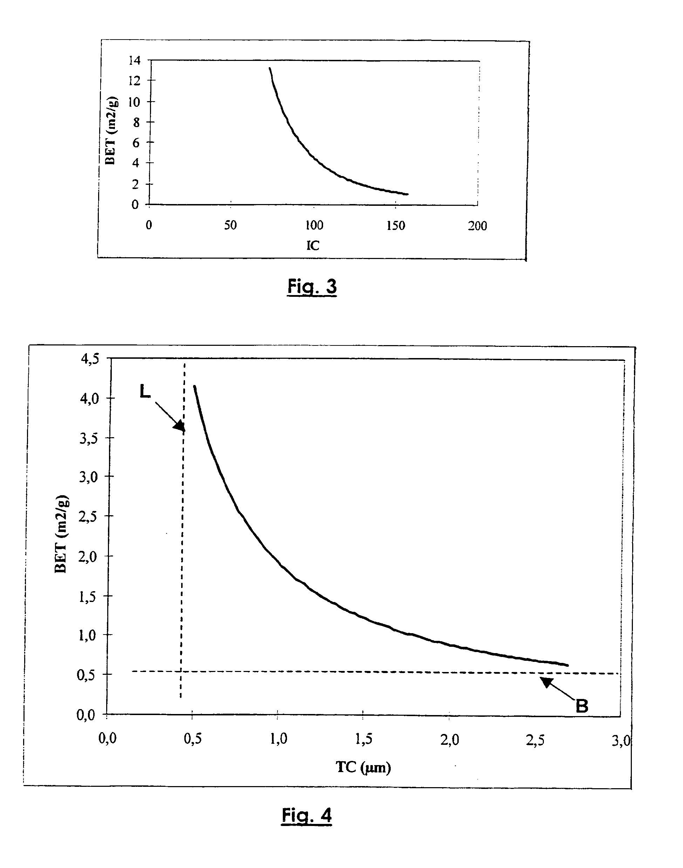

Pour l'ensemble des produits, on trouve une correspondance bijective entre l'indice de calcination (IC) et les valeurs de BET (figure 3).

La figure 4 montre une corrélation établie classiquement entre la surface BET et la taille de cristallite (TC) - caractérisée ici par le diamètre passant d50 obtenu par granulométrie après broyage - dans le domaine intéressant les céramistes et les réfractoristes (0.8 à 5 m2/g). Cette corrélation est du type :

$$BET = A/(TC-L)+B$$

où B (de l'ordre de 0,5 m2/g) représente la limite analytique de la mesure du BET et où L (de l'ordre de 0,4 $\mu$m) représente la limite analytique de la mesure granulométrique.

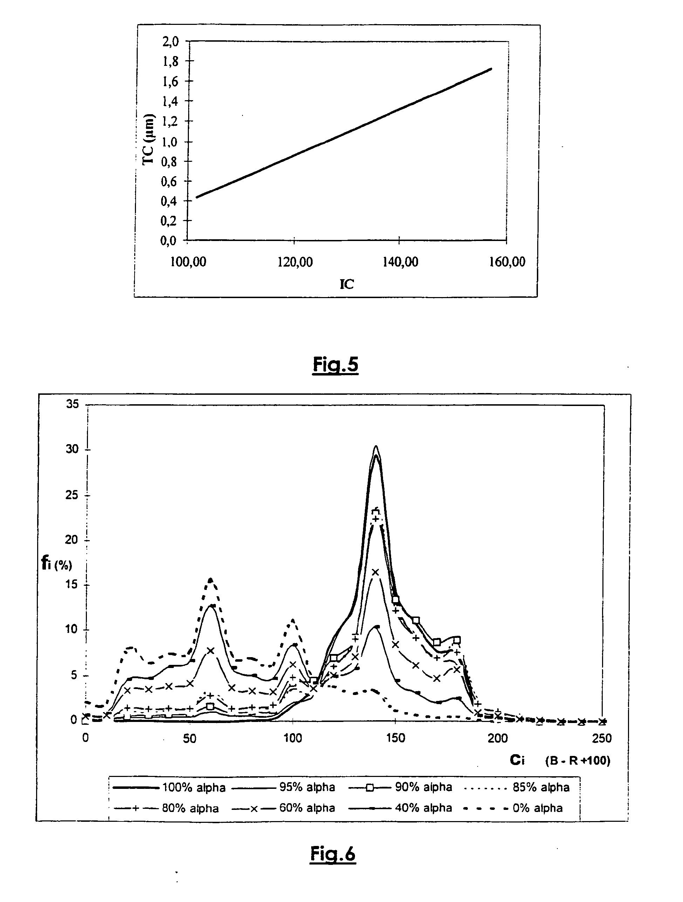

On peut donc corrèler l'indice de calcination IC avec la taille de cristallite TC et l'on obtient dans le domaine intéressant les céramistes et réfractoristes une relation linéaire : TC=A'· IC + B' (Figure 5). Une telle relation est affinée pour chaque famille de produit.

### Détermination de l'indice d'homogénéité

Les spectres de certains produits sont plus étalés que d'autres et présentent des couleurs de grains variées. L'indice d'homogénéité a été défini pour tenir compte de l'étalement et de la dispersion de telles courbes. On a retenu pour une famille de produits l'écart type des fréquences.

Pour illustrer la représentativité de cet indice, nous avons préparé en laboratoire deux produits : un calciné (BET = 1,4 m$^2$ /g) et un sous calciné (BET = 77 m$^2$ /g) que nous avons mélangés. Le premier (correspondant sur la figure 6 à « 100% alpha ») a une courbe resserrée, le second (correspondant sur la figure 6 à « 0% alpha ») est plus étalé. Les spectres obtenus sur différents mélanges (correspondant à « x% alpha », où x est successivement égal à 95, 90, 85, 80, 60 et 40) sont représentés sur la figure 6.

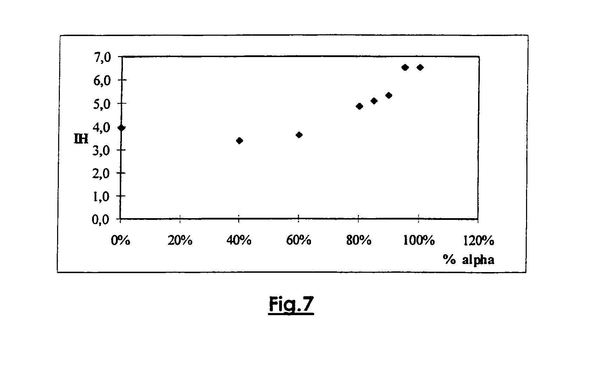

La figure 7 montre, en fonction du pourcentage d'alumine calcinée (symbolisé par « % alpha »), l'évolution de l'indice d'homogénéité (IH) des différents mélanges obtenus. On constate que tout mélange comportant jusqu'à 70% de l'alumine calcinée a un indice d'homogénéité plus faible que celui de l'alumine sous-calcinée.

### AVANTAGES DU PROCEDE SELON L'INVENTION

- réponse rapide et fiable
- méthode de mesure intégrable dans le suivi de la fabrication des alumines calcinées; sur le plan pratique, la préparation de l'échantillon nécessite une petite formation mais la détermination des coefficients IC et IH est automatique, ce qui permet à l'opérateur de réagir rapidement en cas de dérive des paramètres de production. Cette action plus rapide a deux effets bénéfiques : une plus grande flexibilité du four et une meilleure stabilité des conditions de calcination. On peut gagner ainsi 20% sur les produits hors norme.

### Revendications

**1.** Procédé de mesure du degré et de l'homogénéité de la calcination de l'alumine **caractérisé en ce qu'**il comprend l'emploi d'un dispositif d'analyse d'image équipé d'une caméra sensible dans une fenêtre d'analyse spectrale correspondant à un domaine de longueurs d'ondes comprises entre 1000 Å et 10.000 Å et **en ce qu'**il comporte les étapes suivantes:

    a) mélange de l'alumine à analyser dans un liquide dont l'indice de réfraction est, dans ledit domaine de longueurs d'onde, compris entre l'indice de réfraction d'une alumine faiblement calcinée et l'indice de réfraction d'une alumine fortement calcinée :
    b) préparation d'une lame pour observation dudit mélange dans ledit dispositif d'analyse d'images, ledit mélange étant éclairé par un rayonnement polychromatique stable compatible avec ladite fenêtre d'analyse spectrale:
    c) réception de l'image par la caméra et traitement du signal aboutissant à la définition d'une image composée d'un nombre donné de pixels à trois composantes calorimétriques:
    d) traitement statistique desdits pixels utilisant leurs composantes colorimétriques et permettant de donner le degré de calcination et l'homogénéité de la calcination, par comparaison des données obtenues avec des données correspondantes d'alumines connues.

**2.** Procédé selon la revendication 1 dans lequel la fenêtre d'analyse spectrale de la caméra est le spectre visible et dans lequel l'indice de réfraction du liquide est choisi entre 1,70 et 1,76.

**3.** Procédé selon la revendication 1 ou 2 dans lequel le système de grossissement du dispositif d'analyse d'image est tel qu'il permet d'obtenir des images dudit mélange contenant entre 50 et 1000 particules.

**4.** Procédé selon l'une quelconque des revendications 1 à 3 dans lequel les images sont définies par des pixels à trois composantes colorimétriques RVB.

**5.** Procédé selon la revendication 4 dans lequel les pixels sont classés suivant la composante « B-R » (bleu moins rouge), l'histogramme ainsi obtenu ayant une moyenne et un écart-type caractéristiques respectivement du degré et de l'homogénéité de la calcination de l'alumine ainsi observée.

**6.** Procédé de contrôle en cours de fabrication du degré et de l'homogénéité de calcination des alumines incluant le prélèvement de l'alumine produite **caractérisé en ce que** l'alumine prélevée est analysée selon le procédé de mesure selon l'une quelconque des revendications 1 à 5.

**Claims**

**1.** Method for measuring the degree and homogeneity of calcination of alumina, **characterised in that** it comprises the use of an image analysis device equipped with a camera sensitive in a spectral analysis window corresponding to a range of wavelengths between 1000 Å and 10 000 Å, and that it comprises the following steps:

a) mix of the alumina to be analysed in a liquid for which the refraction index in said wavelength range is between the refraction index of a slightly calcined alumina and the refraction index of a strongly calcined alumina;
b) preparation of a plate for observation of said mix in said image analysis device, said mix being illuminated by stable polychromatic radiation compatible with said spectral analysis window;
c) reception of the image by the camera and signal processing leading to the definition of an image composed of a given number of pixels with three colorimetric components;
d) statistical processing of said pixels, using their colorimetric components and capable of giving the degree of calcination and the homogeneity of calcination, by comparison of data obtained with corresponding data for known aluminas.

**2.** Method according to claim 1, in which the spectral analysis window of the camera is the visible spectrum and in which the refraction index of the liquid is chosen to be between 1.70 and 1.76.

**3.** Method according to either claim 1 or 2, in which the magnification system of the image analysis device is such that it is capable of obtaining images of said mix containing between 50 and 1 000 particles.

**4.** Method according to any one of claims 1 to 3, in which the images are defined by pixels with three RGB colorimetric components.

**5.** Method according to claim 4, in which the pixels are classified using the "B-R" (blue minus red) component, the average value of the histogram thus obtained being characteristic of the degree of the calcination of the alumina thus observed, and the standard deviation of the histogram being characteristic of its homogeneity.

**6.** Method of checking the degree and homogeneity of calcination of alumina during manufacturing, including sampling of the alumina produced, **characterised in that** the sampled alumina is analysed using the measurement method according to any one of claims 1 to 5.

**Patentansprüche**

**1.** Verfahren zur Messung des Grades und der Homogenität der Kalzinierung von Aluminiumoxid, **dadurch gekennzeichnet, dass** es den Einsatz einer Bildanalyseeinrichtung mit einer sensiblen Kamera in einem einem Wellenlängenbereich von 1000 Å bis 10000 Å entsprechenden Spektralanalysefenster umfasst und folgende Schritte aufweist:

a) Mischen des zu analysierenden Aluminiumoxids in einer Flüssigkeit, deren Brechzahl in dem genannten Wellenlängenbereich zwischen der Brechzahl eines schwach kalzinierten Aluminiumoxids und der Brechzahl eines stark kalzinierten Aluminiumoxids liegt;
b) Herstellung einer Platte zur Beobachtung des Gemischs in der Bildanalyseeinrichtung, wobei das Gemisch durch eine gleichmäßige polychromatische Strahlung, die mit dem Spektralanalysefenster kompatibel ist, beleuchtet wird;
c) Empfang des Bildes durch die Kamera und Signalverarbeitung, was zur Auflösung eines Bildes bestehend aus einer gegebenen Anzahl Pixel mit drei Farbanteilen führt;
d) statistische Bearbeitung der Pixel unter Nutzung ihrer Farbanteile zur Angabe des Kalzinierungsgrades und der Homogenität der Kalzinierung durch Vergleich der erhaltenen Daten mit den entsprechenden Daten bekannter Aluminiumoxide.

**2.** Verfahren nach Anspruch 1, bei dem das Spektralanalysefenster der Kamera das sichtbare Spektrum ist und die Brechzahl der Flüssigkeit zwischen 1,70 und 1,76 gewählt wird.

**3.** Verfahren nach Anspruch 1 oder 2, bei dem das Vergrößerungssystem der Bildanalyseeinrichtung so ausgebildet ist, dass Bilder des Gemischs mit 50 bis 1000 Partikeln erhalten werden können.

**4.** Verfahren nach irgendeinem der Ansprüche 1 bis 3, bei dem die Bilder durch Pixel mit drei Farbanteilen RGB definiert sind.

**5.** Verfahren nach Anspruch 4, bei dem die Pixel nach dem Farbanteil "B-R" (Blau minus Rot) sortiert werden, wobei das so erhaltene Histogramm einen Mittelwert und eine Standardabweichung hat, die für den Grad bzw. die Homogenität der Kalzinierung des so beobachteten Aluminiumoxids charakteristisch sind.

**6.** Verfahren zur Prüfung des Grades und der Homogenität der Kalzinierung der Aluminiumoxide während der Herstellung, umfassend die Entnahme des erzeugten Aluminiumoxids, **dadurch gekennzeichnet, dass** das entnommene Aluminiumoxid gemäß dem Messverfahren nach irgendeinem der Ansprüche 1 bis 5 analysiert wird.

**Fig. 1**

**Fig. 2**

Fig. 3

Fig. 4

**Fig.5**

**Fig.6**

**Fig.7**